# EUROPÄISCHE PATENTANMELDUNG

(11) **EP 2 426 337 A1**
(43) Veröffentlichungstag der Anmeldung: **07.03.2012**
(21) Anmeldenummer: 10175220.2
(22) Anmeldetag: 03.09.2010
(51) Int. Cl.: F02C 6/18, F02C 7/224, F01K 23/10

(54) **Einrichtung zur Brennstoffvorwärmung sowie Verfahren zur Brennstoffvorwärmung**

(71) Anmelder: Siemens Aktiengesellschaft, 80333 München (DE)
(72) Erfinder: Seyller, Peter, 90513, Zirndorf (DE)

(57) **Zusammenfassung**

Die Erfindung betrifft eine Einrichtung zur Brennstoffvorwärmung umfassend einen Kondensatvorwärmer (21), eine erste Leitung (26) vom Kondensatvorwärmer (21) zu einer Pumpe (27), eine zweite Leitung (38) von der Pumpe (27) zu einem Mitteldruckeconomizer (50) und eine dritte Leitung (44) vom Mitteldruckeconomizer (50) zu einem Wärmetauscher (42), in den sekundärseitig eine Brennstoffleitung (43) zur Aufnahme von Wärme geschaltet ist, wobei eine Bypassleitung (46) mit einer Absperrarmatur (45, 49) von der zweiten Leitung (38) abzweigt und in die dritte Leitung (44) mündet. Die Erfindung betrifft ferner ein Verfahren zur Brennstoffvorwärmung.

## Beschreibung

Die Erfindung betrifft eine Einrichtung zur Brennstoffvorwärmung, insbesondere für eine Kraftwerksanlage sowie ein Verfahren zur Wirkungsgraderhaltung bei Brennstoffvorwärmung mit variablem Temperatursollwert.

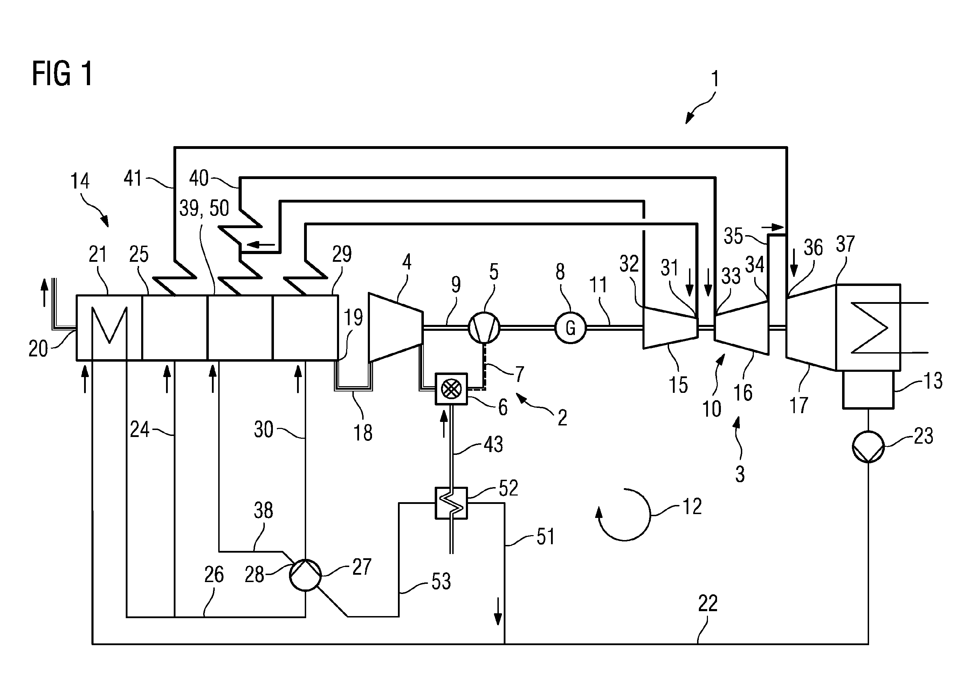

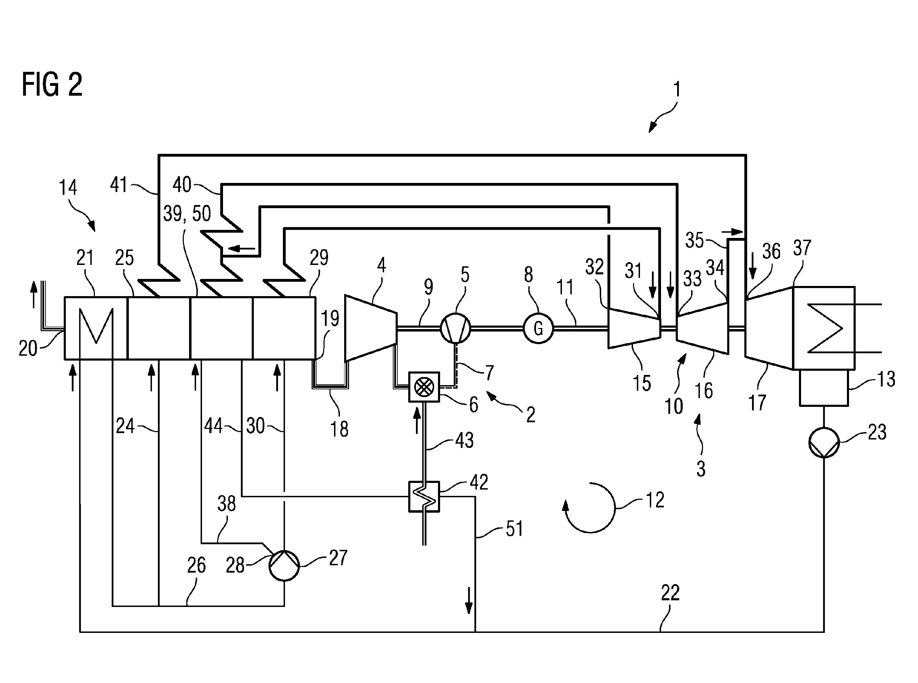

Bei GuD-Anlagen wird gemeinhin eine Brennstoffvorwärmung zur Steigerung des Wirkungsgrades eingesetzt. Für die Brennstoffvorwärmung in GuD-Anlagen mittels Kondensat bzw. Speisewasser wird die erreichbare Erdgastemperatur durch die Quelle des Heizmediums bestimmt bzw. anders herum bestimmt die von der Gasturbine maximal zugelassene Erdgastemperatur die Herkunft des Heizmediums. Wie in Figur 1 gezeigt, kann in GuD-Anlagen für vergleichsweise niedere maximal zulässige Erdgastemperaturen von beispielsweise ca. 130°C Speisewasser direkt nach dem Kondensatvorwärmer entnommen und zu einem Wärmetauscher geführt werden. Figur 2 zeigt, dass bei höheren Erdgastemperaturen bis ca. 200°C beispielsweise Mitteldruckspeisewasser nach dem Mitteldruckeconomizer entnommen und einem Wärmetauscher zugeführt werden kann. Bedingt durch die unterschiedlichen Systemdrücke kommt bei niederen Speisewassertemperaturen und niederem Speisewasserdruck ein doppelwandiger Rohrbündelwärmetauscher zum Einsatz und bei höheren Speisewassertemperaturen und höherem Speisewasserdruck ein einwandiger Rohrbündelwärmetauscher. Der einwandige Rohrbündelwärmetauscher ist kostengünstiger und robuster. Betreibt man den günstigeren einwandigen Wärmetauscher in der oben genannten Schaltung wegen Limitierung durch die Gasturbine bei niedrigerer Temperatur, z.B. auch nur bei 130°C, so ist der GuD-Wirkungsgrad gegenüber der anderen Ausführung im Wirkungsgrad schlechter zu bewerten. Ursache hierfür ist, dass das höher temperierte Wasser zur Erzeugung der gleichen Erdgastemperatur herangezogen wird, was die exergetisch schlechtere Lösung ist.

Das Problem wurde bisher dadurch gelöst, dass die technisch aufwändigere Lösung (doppelwandiger Wärmetauscher) eingesetzt wurde. Weiterhin sind einwandige Lösungen bekannt, bei denen eine aufwändige Leckageüberwachung installiert wurde.

Aufgabe der Erfindung ist es, die genannte Vorrichtung und das genannte Verfahren weiterzuentwickeln, so dass der Wirkungsgrad bei Brennstoffvorwärmung mit variablem Temperatursollwert erhalten bleibt.

Erfindungsgemäß wird diese Aufgabe gelöst durch die Vorrichtung gemäß Anspruch 1 und das Verfahren gemäß Anspruch 9. Vorteilhafte Weiterbildungen der Erfindung sind in den jeweiligen abhängigen Ansprüchen definiert. Indem in einer Einrichtung zur Brennstoffvorwärmung umfassend einen Kondensatvorwärmer, eine erste Leitung vom Kondensatvorwärmer zu einer Pumpe, eine zweite Leitung von der Pumpe zu einem Mitteldruckeconomizer und eine dritte Leitung vom Mitteldruckeconomizer zu einem Wärmetauscher, in den sekundärseitig eine Brennstoffleitung zur Aufnahme von Wärme geschaltet ist, eine Bypassleitung mit einer Absperrarmatur von der zweiten Leitung abzweigt und in die dritte Leitung mündet, wird folgendes erreicht:
Der Einsatz des einwandigen Rohrbündel-Wärmetauschers ohne Wirkungsgradverlust bei Erdgastemperaturen im Bereich von 130°C wird ermöglicht, indem die Wärmequelle für die Vorwärmung an eine Stelle verschoben wird, an der zwar der höhere Systemdruck aber auch noch die niedrigere Temperatur existiert. Hierzu wird das Speisewasser auf einer bereits erhöhten Druckstufe vor und, für Temperaturen über 130°C, nach dem Mitteldruckeconomizer entnommen.

Vorteilhafter Weise ist die Absperrarmatur eine Regelarmatur. Damit erreicht man eine stufenlose Regelbarkeit der Erdgastemperatur und somit eine Anpassung an jede von der Gasturbine gewünschte Temperatur im Bereich zwischen 130°C und etwa 200°C.

Zweckmäßiger Weise ist dabei die Regelarmatur ein 3-Wege-Ventil, das zusätzlich in die dritte Leitung geschaltet ist.

Alternativ hierzu kann die Regelung der Mischung auch durch eine einfache Regelarmatur in Verbindung mit einem Rückschlagventil in der dritten Leitung erfolgen.

Vorteilhafter Weise ist ein Temperaturfühler in die dritte Leitung geschaltet und mit der Regelarmatur verbunden, so dass der Wert der Regelgröße, d.h. der Mischtemperatur, gemessen werden kann und abhängig von seiner Abweichung zum Soll-Wert automatisch eine Rückkopplung zur Steuergröße, d.h. der Einstellung des Mischungsverhältnisses, erfolgen kann.

Zweckmäßiger Weise zweigt eine vierte Leitung, die in Strömungsverbindung mit der dritten Leitung steht, vom Wärmetauscher ab und mündet in eine Kondensatleitung zum Kondensatvorwärmer, so dass ein geschlossener Kreislauf entsteht und kein Speisewasser verworfen werden muss.

Ebenfalls zweckmäßig ist es, wenn die Pumpe eine Hochdruckspeisepumpe mit Mitteldruckentnahme ist.

In einer alternativen Ausführungsform ist die Pumpe eine separate Mitteldruckspeisepumpe.

Die Erfindung wird beispielhaft anhand der Zeichnungen näher erläutert. Es zeigen schematisch und nicht maßstäblich:
- Figur 1: eine Brennstoffvorwärmung mit Niederdruckspeisewasser und doppelwandigem Wärmetauscher nach dem Stand der Technik,
- Figur 2: eine Brennstoffvorwärmung mit Mitteldruckspeisewasser und einwandigem Wärmetauscher nach dem Stand der Technik,
- Figur 3: eine Brennstoffvorwärmung mit Mitteldruckspeisewasser nach der Erfindung und
- Figur 4: eine weitere Ausführungsform der Brennstoffvorwärmung mit Mitteldruckspeisewasser nach der Erfindung.

Die Figur 1 zeigt schematisch und beispielhaft eine Brennstoffvorwärmung mit Niederdruckspeisewasser und doppelwandigem Wärmetauscher nach dem Stand der Technik in einer Gas- und Dampfturbinenanlage 1.

Die Gas- und Dampfturbinenanlage 1 umfasst eine Gasturbinenanlage 2 und eine Dampfturbinenanlage 3.

Die Gasturbinenanlage 2 umfasst eine Gasturbine 4 mit angekoppeltem Luftverdichter 5 und eine der Gasturbine 4 vorgeschaltete Brennkammer 6, die an eine Druckluftleitung 7 des Verdichters 5 angeschlossen ist. Die Gasturbine 4 und der Luftverdichter 5 sowie ein Generator 8 sitzen auf einer gemeinsamen Welle 9. Die Erfindung wird anhand einer Einwellenanlage erläutert, ist jedoch auch auf Mehrwellenanlagen anwendbar.

Die Dampfturbinenanlage 3 umfasst eine Dampfturbine 10, die über die Welle 11 ebenfalls mit dem Generator 8 gekoppelt ist, und in einem Wasser-Dampf-Kreislauf 12 einen der Dampfturbine 10 nachgeschalteten Kondensator 13 sowie einen Abhitzedampferzeuger 14. Die Dampfturbine 10 besteht aus einer ersten Druckstufe oder einem Hochdruckteil 15 und einer zweiten Druckstufe oder einem Mitteldruckteil 16 sowie einer dritten Druckstufe oder einem Niederdruckteil 17, die über die gemeinsame Welle 11 den Generator 8 antreiben.

Zum Zuführen von in der Gasturbine 2 entspanntem Arbeitsmittel oder Rauchgas in den Abhitzedampferzeuger 14 ist eine Abgasleitung 18 an einen Eingang 19 des Abhitzedampferzeugers 14 angeschlossen. Das entspannte Arbeitsmittel aus der Gasturbine 2 verlässt den Abhitzedampferzeuger 14 über dessen Ausgang 20 in Richtung auf einen nicht näher dargestellten Kamin.

Der Abhitzedampferzeuger 14 umfasst einen Kondensatvorwärmer 21, der eingangsseitig über eine Kondensatleitung 22, in die eine Kondensatpumpeneinheit 23 geschaltet ist, mit Kondensat aus dem Kondensator 13 bespeisbar ist. Der Kondensatvorwärmer 21 ist ausgangsseitig über eine Leitung 24 an eine Niederdruckstufe 25 des Abhitzedampferzeugers 14 und über eine erste Leitung 26 an eine Hochdruckspeisepumpe 27 mit Mitteldruckentnahme 28 angeschlossen.

Die Hochdruckspeisepumpe 27 bringt das Speisewasser auf ein für eine dem Hochdruckteil 15 der Dampfturbine 10 zugeordnete Hochdruckstufe 29 des Abhitzedampferzeugers 14 geeignetes Druckniveau. Das unter hohem Druck stehende Speisewasser ist der Hochdruckstufe 29 über eine Speisewasserleitung 30 zuführbar. Die Hochdruckstufe 29 umfasst einen Speisewasservorwärmer, einen Hochdruckverdampfer, sowie einen Hochdrucküberhitzer (nicht gezeigt). Der Hochdrucküberhitzer ist ausgangsseitig mit dem Dampfeinlass 31 des Hochdruckteils 15 der Dampfturbine 10 verbunden.

Der Dampfauslass 32 des Hochdruckteils 15 der Dampfturbine 10 ist an den Dampfeinlass 33 des Mitteldruckteils 16 der Dampfturbine 10 angeschlossen. Dessen Dampfauslass 34 ist über eine Überströmleitung 35 mit dem Dampfeinlass 36 des Niederdruckteils 17 der Dampfturbine 10 verbunden. Der Dampfauslass 37 des Niederdruckteils 17 der Dampfturbine 10 ist an den Kondensator 13 angeschlossen, so dass ein geschlossener Wasser-Dampf-Kreislauf 12 entsteht.

Von der Hochdruckspeisepumpe 27 zweigt zudem an einer Entnahmestelle 28, an der das Kondensat einen mittleren Druck erreicht hat, eine zweite Leitung 38 ab. Diese ist über einen weiteren Speisewasservorwärmer oder Mitteldruckeconomizer 50 mit einer dem Mitteldruckteil 16 der Dampfturbine 10 zugeordneten Mitteldruckstufe 39 des Wasser-Dampf-Kreislaufs verbunden. Die Mitteldruckstufe 39 ist zum Abführen von Mitteldruck-Frischdampf über eine Dampfleitung 40 an den Dampfeinlass 33 des Mitteldruckteils 16 der Dampfturbine 10 angeschlossen.

Entsprechend ist zum Abführen von Niederdruck-Frischdampf die Niederdruckstufe 25 über eine Dampfleitung 41 an die Überströmleitung 35 angeschlossen. Der Wasser-Dampf-Kreislauf 12 der Gas- und Dampfturbinenanlage 1 umfasst im Ausführungsbeispiel somit drei Druckstufen 25, 39 und 29. Alternativ können aber auch weniger, insbesondere zwei, Druckstufen vorgesehen sein.

Zur Brennstoffvorwärmung wird im Ausführungsbeispiel der Figur 1 Speisewasser direkt nach dem Kondensatvorwärmer 21 entnommen und über die erste Leitung 26 und eine Leitung 53 zum Wärmetauscher 52 geführt, der sekundärseitig an eine Brennstoffleitung 43 angeschlossen ist. Bedingt durch die unterschiedlichen Systemdrücke ist der Wärmetauscher 52 doppelwandig ausgeführt.

Das Speisewasser wird nach Abkühlung im Wärmetauscher 52 über eine als vierte Leitung 51 bezeichnete Leitung, die in Strömungsverbindung mit der Leitung 53 steht und vom Wärmetauscher 52 abzweigt, in die Kondensatleitung 22 zurückgeführt.

Im Ausführungsbeispiel der Figur 2 wird Speisewasser nach dem Kondensatvorwärmer 21 über eine erste Leitung 26 zu einer Hochdruckspeisepumpe 27 mit Mitteldruckentnahme 28 geleitet und über die zweite Leitung 38 unter erhöhtem Druck einem Mitteldruckeconomizer 50 in der Mitteldruckstufe 39 zugeführt und dort erwärmt. Das Speisewasser, das stärker erwärmt ist als im Ausführungsbeispiel der Figur 1, wird zur Brennstoffvorwärmung dem Mitteldruckeconomizer 50 entnommen und über eine dritte Leitung 44 dem Wärmetauscher 42 zugeführt. Der Wärmetauscher 42 kann in diesem Ausführungsbeispiel ein einwandiger Rohrbündelwärmetauscher sein.

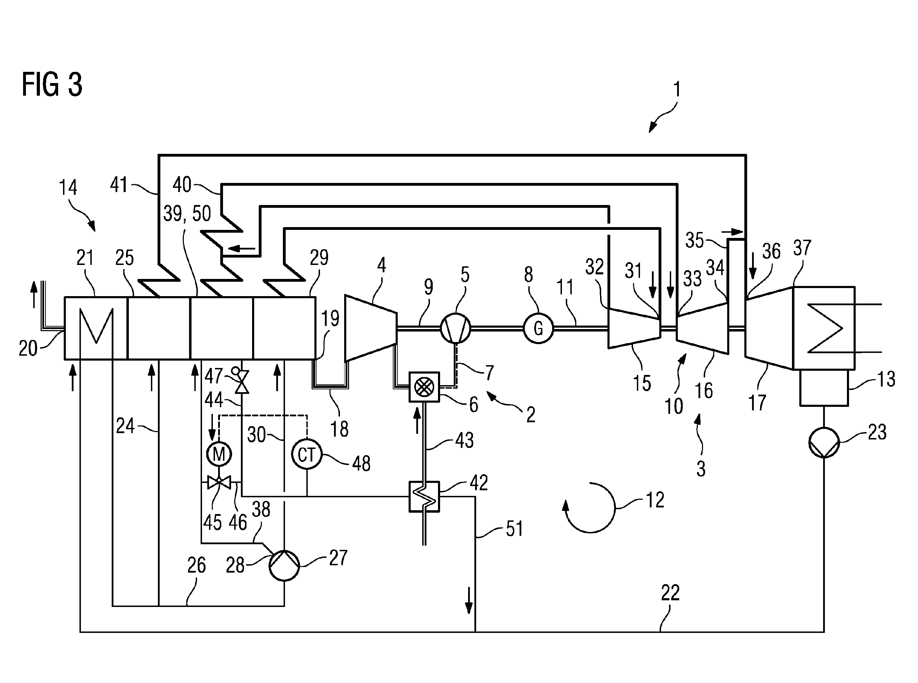

Figur 3 zeigt ein erstes Ausführungsbeispiel der Einrichtung zur Brennstoffvorwärmung gemäß der Erfindung. Die Einrichtung zur Brennstoffvorwärmung gemäß der Erfindung umfasst den Kondensatvorwärmer 21, die erste Leitung 26 vom Kondensatvorwärmer 21 zur Pumpe 27, die zweite Leitung 38 von der Pumpe 27 zum Mitteldruckeconomizer 50 in der Mitteldruckstufe 39, und eine dritte Leitung 44 vom Mitteldruckeconomizer 50 zu einem Wärmetauscher 42, in den sekundärseitig eine Brennstoffleitung 43 zur Aufnahme von Wärme geschaltet ist. Nach der Erfindung zweigt eine Bypassleitung 46 mit einer Absperr- bzw. Regelarmatur 45 von der zweiten Leitung 38 ab und mündet in die dritte Leitung 44. Die dritte Leitung 44 weist stromaufwärts der Einmündung der Bypassleitung ein Rückschlagventil 47 auf. Im Betrieb wird Speisewasser zur Brennstoffvorwärmung bei erhöhtem Systemdruck sowohl vor als auch nach der Erwärmung im Mitteldruckeconomizer 50 der Mitteldruckstufe 39 dem Wasser-Dampf-Kreislauf 12 entnommen und nach Bedarf gemischt, bevor es dem Wärmetauscher 42 temperaturrichtig zur Brennstoffvorwärmung zugeführt wird.

Zur Regelung der Mischtemperatur ist ein Temperaturfühler 48 stromab der Mündung der Bypassleitung 46 in die dritte Leitung 44 geschaltet und mit der Regelarmatur 45 in der Bypassleitung 46 verbunden.

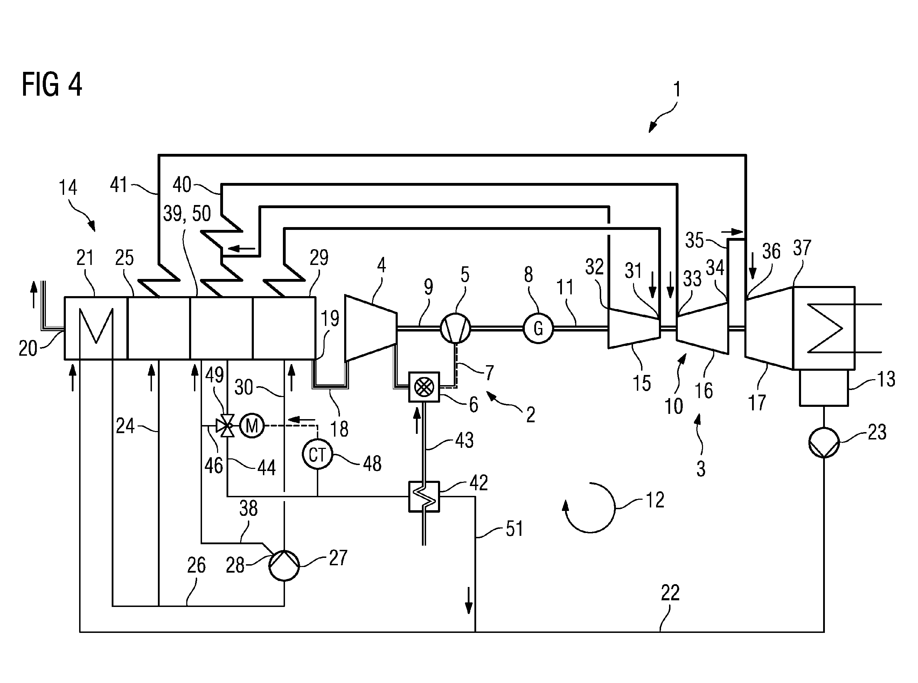

Die Figur 4 zeigt eine alternative Ausführungsform der Erfindung, bei der die Mischung der Speisewasserströme über ein 3-Wege-Ventil 49 an der Mündung der Bypassleitung 46 in die dritte Leitung 44 erfolgt.

Alternativ zur Hochdruckspeisepumpe 27 mit Mitteldruckentnahme 28 ist auch eine Ausführungsform mit einer separaten Mitteldruckspeisepumpe denkbar.

## Patentansprüche

1. Einrichtung zur Brennstoffvorwärmung umfassend einen Kondensatvorwärmer (21), eine erste Leitung (26) vom Kondensatvorwärmer (21) zu einer Pumpe (27), eine zweite Leitung (38) von der Pumpe (27) zu einem Mitteldruckeconomizer (50) und eine dritte Leitung (44) vom Mitteldruckeconomizer (50) zu einem Wärmetauscher (42), in den sekundärseitig eine Brennstoffleitung (43) zur Aufnahme von Wärme geschaltet ist, **dadurch gekennzeichnet, dass** eine Bypassleitung (46) mit einer Absperrarmatur (45, 49) von der zweiten Leitung (38) abzweigt und in die dritte Leitung (44) mündet.

2. Einrichtung nach Anspruch 1, wobei die Absperrarmatur (45, 49) eine Regelarmatur (45, 49) ist.

3. Einrichtung nach Anspruch 2, wobei die Regelarmatur (49) ein 3-Wege-Ventil (49) ist, das zusätzlich in die dritte Leitung (44) geschaltet ist.

4. Einrichtung nach Anspruch 2, wobei ein Rückschlagventil (47) in die dritte Leitung (44) geschaltet ist.

5. Einrichtung nach einem der vorhergehenden Ansprüche, wobei ein Temperaturfühler (48) in die dritte Leitung (44) geschaltet und mit der Regelarmatur (45, 49) verbunden ist.

6. Einrichtung nach einem der vorhergehenden Ansprüche, wobei eine vierte Leitung (51), die in Strömungsverbindung mit der dritten Leitung (44) steht, vom Wärmetauscher (42) abzweigt und in eine Kondensatleitung (22) zum Kondensatvorwärmer (21) mündet.

7. Einrichtung nach einem der vorhergehenden Ansprüche, wobei die Pumpe (27) eine Hochdruckspeisepumpe (27) mit Mitteldruckentnahme (28) ist.

8. Einrichtung nach einem der Ansprüche 1 bis 6, wobei die Pumpe (27) eine separate Mitteldruckspeisepumpe ist.

9. Verfahren zur Brennstoffvorwärmung bei dem Speisewasser einer Temperatur T1 auf ein Druckniveau einer Mitteldruckstufe (39) eines Wasser-Dampf-Kreislaufs (12) einer Kraftwerksanlage gebracht wird und zumindest ein Teil des unter Druck stehenden Speisewassers einem Mitteldruckeconomizer (50) zur Erwärmung auf eine Temperatur T2 zugeführt wird, **dadurch gekennzeichnet, dass** das unter Druck stehende Speisewasser der Temperaturen T1 und T2 zur Einstellung einer Temperatur in einem Temperaturbereich von T1 bis T2 gemischt wird und die Mischung einem Wärmetauscher (42) primärseitig zugeführt wird, der sekundärseitig von Brennstoff durchströmt ist.

10. Verfahren nach Anspruch 9, wobei die Mischung geregelt erfolgt.

11. Verfahren nach einem der Ansprüche 9 oder 10, wobei eine aktuelle Temperatur der Mischung gemessen wird und zum Regeln der Zulaufmengen der Teilströme T1 und T2 verwendet wird.

12. Verfahren nach einem der Ansprüche 9 bis 11, wobei das im Wärmetauscher (42) abgekühlte Speisewasser in den Wasser-Dampf-Kreislauf (12) zurückgeführt wird.
